# EUROPÄISCHE PATENTSCHRIFT

(11) **EP 0 812 953 B1**
(45) Veröffentlichungstag und Bekanntmachung des Hinweises auf die Patenterteilung: **16.08.2001**
(21) Anmeldenummer: 97106850.7
(22) Anmeldetag: 25.04.1997
(51) Int. Cl.: D21F 3/02

(54) **Schuhpresse**
Shoe press
Patin de pressage

(30) Priorität: 31.05.1996 DE 19622018
(43) Veröffentlichungstag der Anmeldung: 17.12.1997
(73) Patentinhaber: Voith Paper Patent GmbH, 89522 Heidenheim (DE)
(72) Erfinder: Schiel, Christian, 89522 Heidenheim (DE)

(56) Entgegenhaltungen:
- EP-A- 0 254 819
- EP-A- 0 345 501
- DE-C- 4 409 316
- US-A- 4 643 802
- US-A- 5 262 011

## Beschreibung

Die Erfindung betrifft eine Schuhpresse zur Behandlung einer Materialbahn, mit einem Preßschuh, der durch mehrere an einem Träger abgestützte und als Zylinder/Kolben-Anordnungen ausgebildete Stützelemente unter Zwischenschaltung eines flüssigkeitundurchlässigen Preßmantels und eines Filzbandes an ein Gegenelement, insbesondere eine Gegenwalze, anpreßbar ist, und zur Bildung eines Preßspalts vorgegebener Längserstreckung mit dem Gegenelement eine konkav geformte Anpreßfläche aufweist, wobei der Preßschuh auf den Kolben der Stützelemente verschiebbar und unter Zulassung einer Kippbewegung des Preßschuhs sowohl in Bahnlaufrichtung als auch quer zur Bahnlaufrichtung getragen ist und sich in Bahnlaufrichtung an einem ein Anschlag zur Aufnahme von auf den Preßschuh einwirkenden horizontalen Kräften abstützt.

Eine solche Schuhpresse ist aus der EP 0 345 501 bekannt. Bei dieser Schuhpresse ist der Preßschuh frei verschiebbar auf die Kolben mehrerer Zylinder/Kolben-Anordnungen aufgelegt, wobei in Bahnlaufrichtung hinter dem Preßschuh ein Anschlag vorgesehen ist, gegen den der Preßschuh durch die im Betrieb zwischen der Materialbahn und dem Preßmantel wirksamen Reibkräfte gedrückt werden. Ziel ist dabei, daß der Preßschuh parallel zur Achse der Gegenwalze liegt.

Die gewünschte Parallelität wird bei der bekannten Schuhpresse jedoch nur erreicht, wenn die resultierende Preßkraft mittig am Preßschuh angreift. Bei der normalerweise gewählten Druckverlaufskurve im Preßspalt mit Druckanstieg in Bahnlaufrichtung greift die resultierende Preßkraft am Preßschuh jedoch exzentrisch an, was zu einer Kippbewegung des Preßschuhs als Folge einer stärkeren Kompression von Filz und Materialbahn auf der Ablaufseite des Preßschuhs als auf der Auflaufseite führt.

Als Resultat dieser Kippbewegung verändert sich der Abstand zwischen dem Preßschuh und dem Anschlag. Wenn beispielsweise die Preßkraft gesteigert wird, kippt der Preßschuh derart, daß der Preßschuh an seinem ablauf- bzw. preßspaltauslaßseitigen Ende vom Anschlag abhebt. Liegt hingegen der Preßschuh am Anschlag an und wird in entgegengesetzter Richtung im Sinne einer kleiner werdenden Exzentrizität der auf den Preßschuh wirkenden resultierenden Preßkraft gekippt, was z.B. durch eine Verringerung der Linienkraft oder bei konstanter Linienkraft durch die Abnahme der Kompressibilität eines neu eingelegten Filzes beim Einlaufen in den ersten Betriebsstunden erfolgen kann, kommt es zu Zwängungen und hohen Verklemmungen zwischen dem Anschlag und dem Preßschuh, zwischen dem Preßschuh und den Kolben und zwischen den Kolben und den Kolbenführungen.

Die auftretenden Klemmkräfte können dabei so hoch werden, daß mit erheblichen Verschleiß zu rechnen ist und außerdem die auftretenden Reibungskräfte die im Preßspalt wirksame Preßkraftverteilung in Bahnlaufrichtung in unerwünschter Weise verändern können. Insbesondere, wenn die Klemmung nicht über die gesamte Maschinenbreite erfolgt, kann es zu unterschiedlichen Druckverteilungskurven über die Maschinenbreite mit unerwünschten Auswirkungen auf die Gleichförmigkeit der Papierqualität kommen.

Bei der bekannten Schuhpresse wird auch als nachteilig angesehen, daß bereits die Ausgangslage des Preßschuhs vor Beginn der Belastung schief oder bogenförmig sein kann und dann bei Belastung auch so bleibt, so daß es zu den genannten Nachteilen hinsichtlich der Papierqualität kommt.

Aufgabe der Erfindung ist es demgemäß, eine Schuhpresse der eingangs genannten Art zu schaffen, bei der die Druckverteilung im Preßspalt sowohl in Bahnlaufrichtung als auch quer zur Bahnlaufrichtung zur Erzielung einer gleichmäßigen Papierqualität genau einstellbar ist und der an Kolben, Preßschuh und Anschlag auftretende Verschleiß minimiert ist.

Insbesondere soll bei einer Kippung des Preßschuhs keine nennenswerte Abstandsänderung zwischen dem Preßschuh und dem Anschlag entstehen, außerdem sollen die im Betriebs wirksamen Reibungskräfte minimiert werden. Des weiteren sollen auch thermische Verkrümmungen des Schuhs, z.B. bei einer kurzzeitigen Betriebsunterbrechung, weitgehend kompensiert werden, um das Ziel einer gleichmäßigen Druckverteilung über die Breite bei minimiertem Verschleiß immer zu erreichen.

Diese Aufgabe ist im wesentlichen dadurch gelöst, daß die Kippachse des Preßschuhs und eine Anschlagfläche des Anschlags im wesentlichen in einer gemeinsamen, senkrecht zur Preßebene stehenden Ebene bzw. Zylinderfläche mit einem Radius, der größer als 250 m ist, liegen.

Durch diese Ausbildung wird erreicht, daß im Betrieb bei einer Kippbewegung des Preßschuhs keine Abstandsänderung zwischen dem Preßschuh und dem Anschlag auftritt. Es ist erkannt worden, daß durch diese Verbesserung der Anlagebedingungen des Preßschuhs am Anschlag die zwischen Anschlag, Preßschuh und Kolben wirksamen Reibungs- und Klemmkräfte gering gehalten und damit der Einfluß einer Kippbewegung des Preßschuhs auf die Druckverteilung im Preßspalt minimiert werden kann. Hierdurch kann eine gleichmäßige Papierqualität über die gesamte Maschinenbreite erreicht werden.

Dabei liegen die Kippachse und somit auch die Anschläge nur im Ausnahmefall in einer Ebene, selbst wenn sie ohne Last so angeordnet wurden, weil sich der Träger bzw. auch oft die Gegenwalze unter Belastung durchbiegt. Die Regel ist immer eine mehr oder weniger stark durchgebogene Anordnung von Kippachse und Anschlägen.

Gemäß einer bevorzugten Ausführungsform ist die Mitte der Anschlagfläche gegenüber der durch die Kippachse des Preßschuhs gehenden Zylinderfläche in Richtung des Gegenelements versetzt, wobei der Versatz kleiner oder gleich einem Drittel des maximalen Konstruktionshubes des Preßschuhes ist und insbesondere maximal 15 mm beträgt. Hierdurch wird dem Umstand Rechnung getragen, daß der Preßschuh bei zunehmender Belastung immer nach vorne kippt, d.h. die Einlaufseite sich weniger der Gegenwalze nähert als die Auslaufseite, da durch die getroffene Maßnahme ein Abheben nur um weniger als 1/10 mm zwischen dem Preßschuh und dem Anschlag erfolgt. Dadurch werden Gleitbewegungen unter hoher Zwängungskraft vermieden und der Verschleiß minimiert. Auf der anderen Seite sind so kleine mögliche Abweichungen von der Geradheit des Preßschuhs noch belanglos für die gleichmäßige Form der Druckverteilungskurve quer zur Schuhpresse.

In zweckmäßiger Weise sind an dem Preßschuh und / oder den Kolben auch Mittel zur Verringerung der zwischen dem Preßschuh und dem Kolben auftretenden Reibung vorgesehen, durch die die Minimierung verschleißerzeugender Verzwängungen noch weiter begünstigt wird. Hierzu können die Kolben bzw. der Preßschuh an ihren einander zugewandten Flächen mit einem Gleitbelag versehen sein, wobei die entsprechende Gegenfläche glatt und metallisch ausgebildet ist. Weil die Belagmaterialien mit besonders niedrigem Reibwert meist zu weich sind, werden diese in Verbindung mit zusätzlichen Stützmaterialien aufgebracht. Gleit- und Stützmaterial durchsetzen sich in regelmäßigem oder zufälligem Wechsel. Dabei können z.B. in einer stabilen Matrix eingebettete Körper oder Fäden den Gleitstoff bilden oder umgekehrt Fäden, Filze oder Gewebe eine Gleitstoffmatrix verstärken.

In alternativer oder ergänzender Weise können in den den Preßschuh tragenden Stirnflächen der Kolben hydraulische Drucktaschen ausgebildet sein, durch welche die mechanisch zu übertragende Normalkraft und damit auch die Reibkraft abgesenkt werden kann. Diese Hydrauliktaschen können beliebig, beispielsweise kreisrund, länglich oder eckig in der Stirnseite des Kolbens ausgebildet sein. Der Druck in den Hydrauliktaschen kann dabei beliebig einstellbar sein oder durch eine Verbindung zu dem Druckraum der Stützelemente mit dem Kolbenanpreßdruck gleichgeschaltet werden.

In vorteilhafter Weise können auch Maßnahmen ergriffen sein, um die thermische Verkrümmung des Preßschuhs zu verhindern. Beispielsweise kann der Preßschuh ein auf den Stützelementen aufliegendes Schuhunterteil und ein die Anpreßfläche aufweisendes Schuhoberteil aufweisen, wobei dann zwischen dem Schuhunterteil und dem Schuhoberteil ein wärmeisolierendes Element vorgesehen ist, das einem Wärmeübergang vom Schuhoberteil zum tragenden Schuhunterteil entgegenwirkt.

Alternativ oder zusätzlich können in dem Preßschuh auch Kühlmittelkanäle ausgebildet sein, die mit Kühlmittel durchströmt werden, um den Preßschuh im Betrieb zu kühlen. In vorteilhafter Weise erstrecken sich die Kühlmittelkanäle dabei in Bahnlaufrichtung vom Bereich des Preßspalteinlasses bis in den Bereich bzw. bis kurz vor den Bereich der Preßebene und münden mit sich erweiternden Auslaufbohrungen in die Gleitfläche des Preßschuhs. Bei dieser Anordnung wird der Preßschuh im Bereich des Preßspalteinlasses durch Wärmeübergang von den Kühlmittelkanälen und im Bereich des Preßspaltauslasses durch den Schmierfilm, in den das Kühlmittel eingepreßt worden ist, gekühlt. Durch die sich trompetenartig erweiternden Auslaufbohrungen, die im Bereich der Gleitfläche vorzugsweise eine Austrittsfläche von 1 bis 3 cm² besitzen, kann dabei das Kühlöl möglichst breitflächig im Schmiermittelfilm verteilt werden.

Eine weitere nützliche Maßnahme besteht darin, daß der abgehobene Preßschuh so beaufschlagt wird, daß er ganz oder beinahe an die ablaufseitigen Anschläge anliegt. Dies kann beispielsweise durch Federdruck erfolgen, aber weil die Federkraft Reibungskräfte und Verschleiß erhöht, wird eine Keilanordnung nahe dem Hubende des Preßschuhs gewählt.

Hinsichtlich vorteilhafter Ausgestaltungen und Weiterbildungen der erfindungsgemäßen Schuhpresse wird auf die Unteransprüche sowie die nachfolgende Beschreibung eines Ausführungsbeispiels unter Bezugnahme bei die beiliegende Zeichnung verwiesen. In der Zeichnung zeigt:
- Figur 1: eine Querschnittsansicht einer ersten Ausführungsform der erfindungsgemäßen Schuhpresse,
- Figur 2: eine zweite Ausführungsform einer erfindungsgemäßen Schuhpresse im Schnitt durch ein Stützelement,
- Figur 3: die Schuhpresse aus Figur 2 im Schnitt zwischen zwei Stützelementen,
- Figur 4: in Draufsicht das Stützelement der in Figur 2 dargestellten Schuhpresse bei abgenommenen Preßschuh,
- Figur 5: eine dritte Ausführungsform einer erfindungsgemäßen Schuhpresse in Querschnittsansicht, und
- Figur 6: eine Draufsicht auf das Stützelement der in Figur 5 dargestellten Schuhpresse bei abgenommenen Preßschuh.

In den Figuren sind gleiche Teile stets mit den gleichen Bezugsziffern bezeichnet.

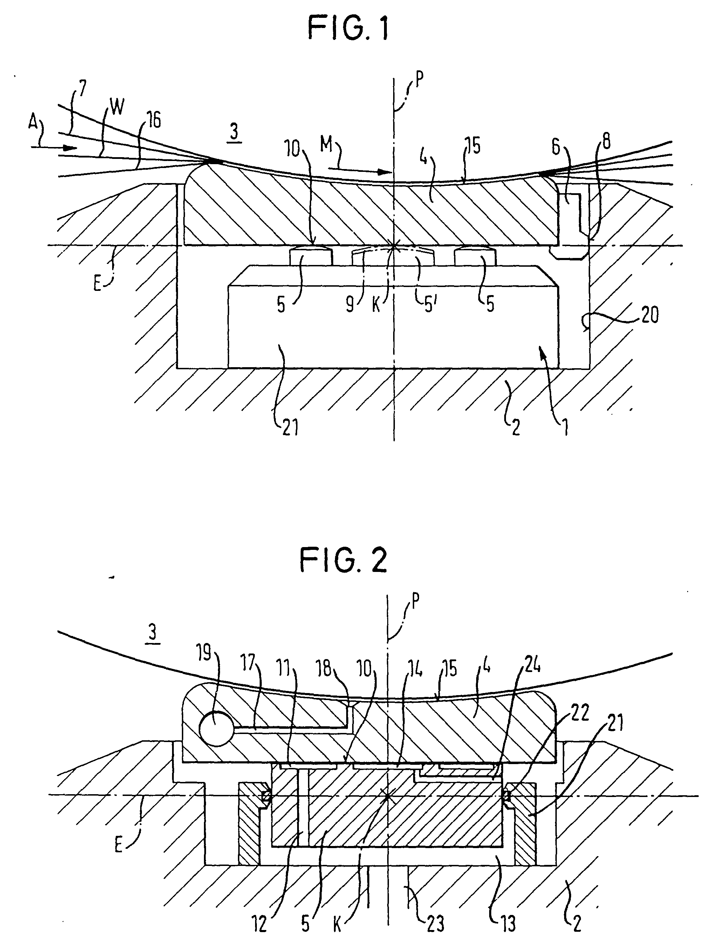

In Figur 1 ist eine erste Ausführungsform einer Schuhpresse dargestellt, wie sie beispielsweise zur Entwässerung einer Materialbahn W verwendet wird. Zu der Preßvorrichtung gehört eine rotierende, angetriebene Walze 3 und ein Preßschuh 4, der an einem ortsfesten Träger 2 angeordnet und radial von außen gegen die Walze 3 anpreßbar ist.

Der Preßschuh 4 weist eine konkav geformte Anpreßfläche 15 auf, die mit der Umfangsfläche der Walze 3 einen Preßspalt vorgegebener Längserstreckung bildet, durch den die zu behandelnde Materialbahn W zwischen einem den Preßschuh 4 umschlingenden Preßmantel 16 und einem Filzband 7 in Bahnlaufrichtung A geführt ist. Die Materialbahn W kann alternativ auch zwischen Walze 3 und Filzband 7 liegen.

Der Preßschuh 4 ist an seiner Unterseite auf zwei sich quer zur Bahnlaufrichtung A erstreckenden Reihen von Stützelementen 1 abgestützt, die jeweils als Zylinder/Kolben-Anordnungen ausgebildet sind und in einem Zylinderblock 21 angeordnete und geführte Kolben 5 aufweisen, auf denen der Preßschuh 4 frei verschieblich und sowohl in Bahnlaufrichtung A als auch quer zur Bahnlaufrichtung A kippbar gelagert ist, wobei die Kippachse K jeweils zwischen den oberen Enden der Kolben 5 liegt, auf denen der Preßschuh 4 aufliegt.

Es ist auch möglich, anstelle der beiden parallelen Reihen von Kolben 5 nur eine einzige Reihe von Kolben 5' vorzusehen, wie dies in Figur 1 strichpunktartig angedeutet ist. In diesem Fall liegt die Kippachse dann am oberen Ende der Kolben 5'.

In Bahnlaufrichtung A gesehen hinter dem Preßschuh 4 ist ein Anschlag 6 zur Aufnahme von auf den Preßschuh 4 einwirkenden horizontalen Kräften vorgesehen, an dem sich der Preßschuh 4 abstützt. Der Anschlag 6 ist an dem Preßschuh 4 angeschraubt und liegt mit einer Anschlagfläche 8 an einer vertikalen Führungsfläche 20 am Träger 2 an. Dabei liegt die Mitte der Anschlagfläche 8 im wesentlichen auf der gleichen Höhe wie die oberen Enden der Kolben 5 und damit auf der gleichen Höhe E wie die Kippachse K, um die der Preßschuh 4 verschwenkbar ist.

Dabei liegen die Kippachse K und somit auch die Anschläge nur im Ausnahmefall exakt in einer Ebene E, wie dies dargestellt ist, weil sich der Träger 2 bzw. auch oft die Walze 3 unter Belastung durchbiegt. Die Regel ist immer eine mehr oder weniger stark durchgebogene Anordnung von Kippachse K und Anschlägen, so daß die Kippachse K des Preßschuhs 4 und die Anschlagfläche 8 auf einer Zylinderfläche liegen, deren Krümmungsradius größer als 250 m ist.

Im Betrieb dreht die Walze 3 in Richtung des Pfeiles M um ihre Achse, die in der Preßebene P liegt. Die Preßebene P ist diejenige Ebene, in der normalerweise die resultierenden Preßkräfte wirken, die durch die beiden parallelen Reihen von Kolben 5 mit jeweils gleicher Preßkraft ausgeübt werden.

Bei der Aufbringung der Preßkraft werden das Filzband 7 und auch die Materialbahn W ungleich über die Länge der Preßzone im Bereich der konkaven Anpreßfläche 15 komprimiert, so daß der Preßschuh 2 nicht nur parallel auf die Walze 1 zubewegt wird, sondern auch noch kippt, weil sich der Abstand zwischen dem Preßschuh 4 und der Walze 3 am Preßspalteinlaß um einen anderen Betrag verändert als am Preßspaltauslaß.

Um zu vermeiden, daß bei einer solchen Kippbewegung in der einen Richtung der Anschlag 6 von der Führungsfläche 20 des Trägers 2 abhebt bzw. bei einer Kippbewegung in der anderen Richtung hohe Zwängungskräfte zwischen dem Anschlag 6 und der vertikalen Führungsfläche 20 am Träger 2, zwischen den Kolben 5 und den entsprechenden Kolbenführungen in dem Zylinderblock 21 sowie zwischen den Kolben 5 und dem Preßschuh 4 auftreten, befinden sich die Anschlagfläche 8 des Anschlags 6 und die Kippachse K des Preßschuhs 4 etwa auf gleicher Höhe, d.h. sie liegen in einer gemeinsamen, senkrecht zur Preßebene P stehenden Ebene E bzw. Zylinderfläche.

Dabei können in zweckmäßiger Weise die Unterseite des Preßschuhs 4 und / oder die kugelabschnittförmig ausgebildeten Stirnflächen 10 der Kolben 5 mit einem Gleitbelag versehen sein, wobei die entsprechende Gegenfläche glatt und metallisch ausgebildet ist. Weil die Belagmaterialien mit besonders niedrigem Reibwert meist zu weich sind, werden diese in Verbindung mit zusätzlichen Stützmaterialien aufgebracht. Gleit- und Stützmaterial durchsetzen sich in regelmäßigem oder zufälligem Wechsel. Dabei können z.B. in einer stabilen Matrix eingebettete Körper oder Fäden den Gleitstoff bilden oder umgekehrt Fäden, Filze oder Gewebe eine Gleitstoffmatrix verstärken.

Es kann auch sinnvoll sein, die Mitte der Anschlagfläche 8 gegenüber der durch die Kippachse K des Preßschuhs 4 gehenden Zylinderfläche in Richtung der Walze 3 zu versetzen, wobei der Versatz kleiner oder gleich einem Drittel des maximalen Konstruktionshubes des Preßschuhes ist und insbesondere maximal 15 mm beträgt. Durch diese Maßnahme wird erreicht, daß der Preßschuh 4 nur um weniger als 1/10 mm von dem Anschlag 6 abhebt, wenn der Preßschuh 4 bei zunehmender Belastung nach vorne kippt, d.h. die Einlaufseite des Preßschuhs 4 sich weniger der Walze 3 nähert als die Ablaufseite. Damit werden Gleitbewegungen unter hoher Zwängungskraft vermieden und der Verschleiß minimiert.

In den Figuren 2 bis 4 ist eine weitere Ausführungsform einer erfindungsgemäßen Schuhpresse unter Weglassung von Filz und Preßmantel dargestellt. Bei dieser Schuhpresse wird ein Preßschuh 4 von einer einzigen Reihe von Kolben 5 gegen eine Gegenwalze 3 gedrückt. Die Kolben 5 sind jeweils in einem Zylinderblock 21 vertikal verschiebbar geführt und in einem ringförmigen Führungs- und Dichtungsbereich 22 um kleine Winkel kippbar gelagert, so daß gewährleistet ist, daß sie auch bei einer Kippung des Preßschuhs 4 stets flächig an dem Preßschuh 4 anliegen. Bei dieser Anordnung liegt die Kippachse K des Preßschuhs 4 im Schnittpunkt einer durch den Führungs- und Dichtungsbereich 22 gehenden horizontalen Ebene E und der Preßebene P. Die Anpressung des Preßschuhs 4 an die Gegenwalze 3 erfolgt durch ein Fluid, welches über eine Versorgungsleitung 23 im Träger 2 in den Druckraum 13 der Stützelemente 1 gelangt.

In der dem Preßschuh 4 zugewandten Stirnfläche 10 des Kolbens 5 ist eine kreisringförmige Drucktasche 11 ausgebildet, die über eine im Kolben 5 ausgebildete Bohrung 12 mit dem Druckraum 13 des Stützelements 1 in Verbindung steht, über den sie im Betrieb mit Druckfluid versorgt wird, wobei der Druck in den Drucktaschen 11 mi dem Druck im Druckraum 13 gleichgeschaltet ist. Es ist alternativ möglich, die Drucktaschen 11 über eine getrennte Leitung mit Druckfluid zu versorgen, um den Druck in den Drucktaschen 11 unabhängig vom Druck im Druckraum 13 einstellen zu können.

Konzentrisch innerhalb der Drucktasche 11 kann sich eine weitere, drucklose Tasche 14 befinden, die über eine Entlastungsbohrung 24 mit der Umgebung kommuniziert.

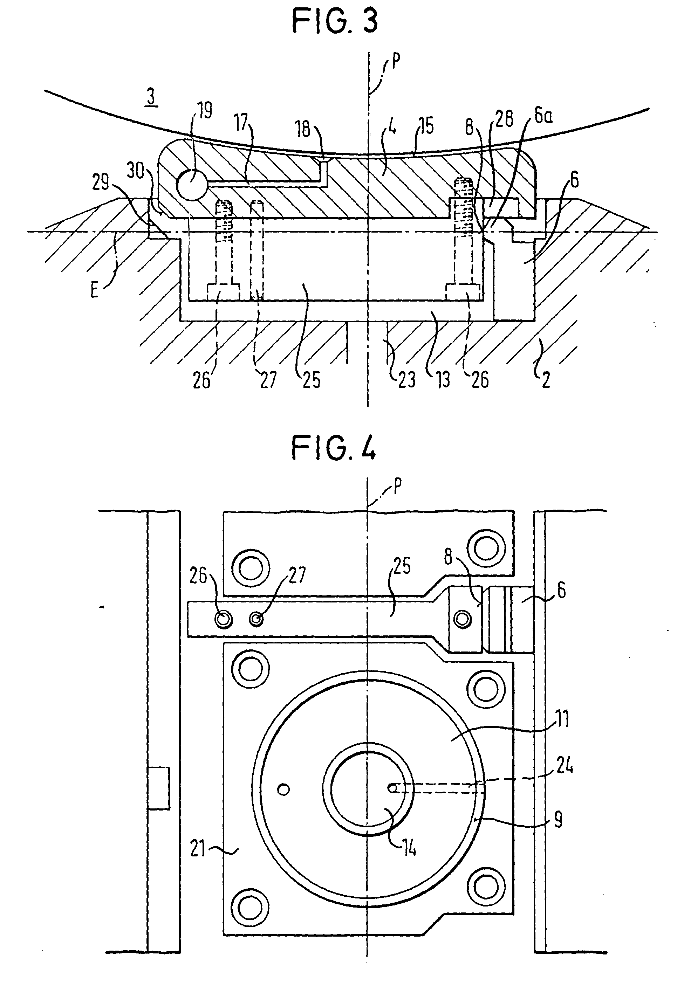

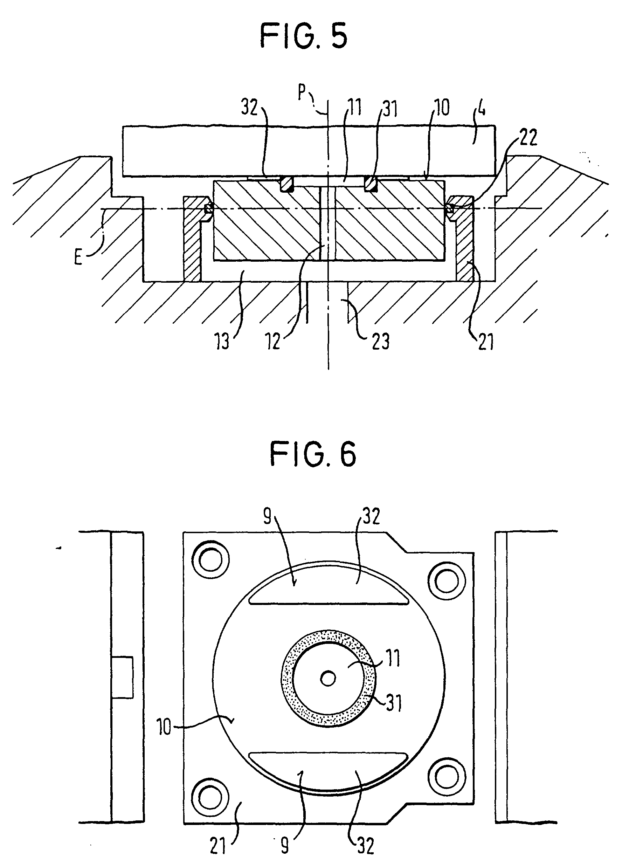

Während die Figur 2 einen Schnitt durch eine Zylinder/Kolben-Anordnung eines Stützelements 1 zeigt, ist der Schnitt der Figur 3 zwischen zwei Zylinder/Kolben-Anordnungen nach Figur 2 hindurchgelegt. In diesen Zwischenräumen sind die Führungselemente für den Preßschuh 4 untergebracht. Im einzelnen ist am Träger 2 ist ein Anschlag 6 befestigt, dessen eine Anschlagfläche 8 aufweisende Anschlagnase 6a etwa auf gleicher Höhe E liegt wie der Führungs- und Dichtungsbereich 22 im Zylinderblock 21 und damit wie die Kippachse K des Preßschuhs 4 (Figuren 2 und 5) .

An der Unterseite des Preßschuhs 4 sind Rippen 25 befestigt, durch die der Preßschuh 4 am Anschlag 6 in Anlage kommt. Die Rippen 25 greifen jeweils von oben in den Bereich zwischen zwei nebeneinanderliegenden Zylinderblöcken 21 hinein und sind an dem Preßschuh 2 durch Schrauben 26 und Stifte 27 befestigt. Um horizontale Schubkräfte besser übertragen zu können, sind in der Unterseite des Preßschuhs 4 Nuten 28 vorgesehen, in welche die Rippen 25 eingreifen.

Wie insbesondere in Figur 4 gut erkennbar ist, sind die Rippen 31 ablaufseitig verdickt ausgebildet, um eine breite Anlagefläche am Anschlag 6 zu ermöglichen. Auflaufseitig hat der Preßschuh 4 bzw. die Rippe 25 etwas Spiel, um ein Verklemmen durch thermische Einflüsse oder bei Kippung des Preßschuhs 4 zu verhindern.

An dem Träger 2 sind weiterhin schräge Rampen 29 vorgesehen, die jeweils mit einer zugeordneten Auflaufschräge 30 an der Unterseite des Preßschuhs 4 zusammenwirken, um in der unteren Endlage des Preßschuhs 4 den Preßschuh 4 und die Rippen 25 gegen die Anschlagnase 6a zu drücken.

Die Betriebsweise der in den Figuren 2 bis 4 dargestellten Schuhpresse entspricht der zuvor erläuterten Betriebsweise der in Figur 1 dargestellten Schuhpresse mit der Maßgabe, daß der Preßschuh 4 nicht direkt von den Kolben 5, sondern durch ein in den Drucktaschen 11 aufgebautes Fluidpolster getragen wird, so daß die zwischen Preßschuh 4 und Kolben 5 wirksamen Reibungskräfte gering sind.

In dem Preßschuh 4 sind außerdem mit einem Kühlmittel durchströmte Kühlmittelkanäle 17 vorgesehen, um den Preßschuh 4 während des Betriebs zu kühlen. Die Kühlmittelkanäle 17 erstrecken sich in Bahnlaufrichtung A vom Bereich des Preßspalteinlasses bis in den Bereich bzw. bis kurz vor den Bereich der Preßebene P und münden über sich trompetenartig erweiternde Auslaufbohrungen 18 in der Anpreßfläche 15 des Preßschuhs 4. Die Kühlmittelkanäle 17, die parallel zueinander verlaufen und quer zur Bahnlaufrichtung A einen Abstand von ca. 15 bis 50 mm haben, sind einlaßseitig mit einer gemeinsamen Versorgungsleitung 19 verbunden, die sich im Bereich des Preßspalteinlasses quer zur Bahnlaufrichtung A im Preßschuh 4 erstreckt. Durch diese Versorgungsleitung 9 wird Kühlmittel herangeführt und über die als Drosselbohrungen ausgebildeten Kühlmittelkanäle 17 und die sich trompetenförmig erweiternden Auslaufbohrungen 18, die im Bereich der Anpreßfläche 15 eine Querschnittsfläche von vorzugsweise 1 cm² bis 3 cm² aufweisen, in den Schmierfilm zwischen dem Preßmantel und dem Preßschuh 4 eingepreßt. Durch dieses Kühlöl wird der Preßschuh 4 sowohl an seinem auflaufseitigen Bereich durch Wärmeübergang von der Versorgungsleitung 19 und den Kühlmittelkanälen 17 her gekühlt, als auch im ablaufseitigen Bereich durch das in den Schmierfilm eingepreßte Öl.

Mit dieser Maßnahme wird dafür gesorgt, daß der Preßschuh 4 überall etwa gleich warm bleibt und sich z.B. bei Entlastung der Stützelemente 1 thermisch nicht verkrümmt. Auch werden Zwängungskräfte in den Führungen der Kolben 5 durch diese Maßnahme vermieden.

Die Figuren 5 und 6 zeigen eine weitere Ausführungsform einer erfindungsgemäßen Schuhpresse, die alternativ zu der in den Figuren 2 bis 4 dargestellten Ausführungsform statt einer großen Drucktasche in der Stirnfläche 10 des Kolbens 5 eine kleinere Drucktasche 11 vorgesehen ist, die mittels einer elastisch anliegenden Dichtung 31 zum Preßschuh 4 hin abgedichtet ist. Die Drucktasche 11 steht über eine Bohrung 12 mit dem Druckraum 13 des Stützraums 1 in Verbindung. Nur ein Teil der Kolbenanpreßkraft wird über die Drucktasche 11 auf den Preßschuh 4 übertragen, der größere Teil der Anpreßkraft geht über zwei Gleitkörper 32 vor und hinter der Drucktasche 11 zum Preßschuh 4.

In Figur 6 sind die Gleitkörper 32 zu sehen, deren ebene Oberflächen gegen den Preßschuh 4 drücken. Die Gleitkörper 32 sind an ihrer dem Preßschuh 4 zugewandten Oberflächen mit einem Gleitbelag 9 versehen, um die Reibung zwischen den Kolben 5 und dem Preßschuh 4 zu verringern. Als Gleitbelag 9 werden insbesondere Beläge verwendet, die eine die hohe Druckbelastung aufnehmende Matrix aufweisen, in welche als ein die Gleitreibung reduzierender Gleitstoff Polytetrafluorethylen (PTFE), Molybdensulfit oder Polyethylen eingearbeitet ist.

## Patentansprüche

1. Schuhpresse zur Behandlung einer Materialbahn, mit einem Preßschuh (4), der durch mehrere an einem Träger (2) abgestützte und als Zylinder/Kolben-Anordnungen ausgebildete Stützelemente (1) unter Zwischenschaltung eines flüssigkeitundurchlässigen Preßmantels (16) und eines Filzbandes (7) an ein Gegenelement (3), insbesondere eine Gegenwalze, anpreßbar ist, und zur Bildung eines Preßspalts vorgegebener Längserstreckung mit dem Gegenelement (3) eine konkav geformte Anpreßfläche (15) aufweist, wobei der Preßschuh (4) auf den Kolben (5) der Stützelemente (1) verschiebbar und unter Zulassung einer Kippbewegung des Preßschuhs (4) sowohl in Bahnlaufrichtung (A) als auch quer zur Bahnlaufrichtung (A) getragen ist und sich in Bahnlaufrichtung (A) an einem Anschlag (6) zur Aufnahme von auf den Preßschuh (4) einwirkenden horizontalen Kräften abstützt,
dadurch **gekennzeichnet**,
daß die Kippachse (K) des Preßschuhs (4) und eine Anschlagfläche (8) des Anschlags (6) im wesentlichen in einer gemeinsamen, senkrecht zur Preßebene (P) stehenden Ebene (E) bzw. Zylinderfläche mit einem Radius, der größer als 250 m ist, liegen.

2. Schuhpresse nach Anspruch 1,
dadurch **gekennzeichnet**,
daß die Mitte der Anschlagfläche (8) gegenüber der durch die Kippachse des Preßschuhs (4) gehenden Ebene (E) bzw. Zylinderfläche in Richtung des Gegenelements (2) versetzt ist, wobei der Versatz kleiner oder gleich einem Drittel des maximalen Konstruktionshubes des Preßschuhs (4) ist.

3. Schuhpresse nach Anspruch 1 oder 2,
dadurch **gekennzeichnet**,
daß die Mitte der Anschlagfläche (8) gegenüber der durch die Kippachse des Preßschuhs (4) gehenden Zylinderfläche in Richtung des Gegenelements (3) versetzt ist und der Versatz maximal 15 mm beträgt.

4. Schuhpresse nach einem der Ansprüche 1 bis 3,
dadurch **gekennzeichnet**,
daß an dem Preßschuh (4) und/oder den Kolben (5) Mittel zur Verringerung der zwischen dem Preßschuh (4) und den Kolben (5) auftretenden Reibung vorgesehen sind.

5. Schuhpresse nach Anspruch 4,
dadurch **gekennzeichnet**,
daß die Kolben (5) an ihren den Preßschuh (4) tragenden Stirnflächen (10) mit einem Gleitbelag (9) versehen sind.

6. Schuhpresse nach Anspruch 5,
dadurch **gekennzeichnet**,
daß der Gleitbelag (9) aus einer stabilen, Druckkräfte aufnehmenden Matrix besteht, in die ein die Gleitreibung reduzierender Gleitstoff eingebettet ist.

7. Schuhpresse nach Anspruch 5,
dadurch **gekennzeichnet**,
daß der Gleitbelag (9) eine Matrix aus einem Gleitstoff aufweist, die durch insbesondere Fäden, Filze oder Gewebe verstärkt ist.

8. Schuhpresse nach Anspruch 6 oder 7,
dadurch **gekennzeichnet**,
daß der Gleitbelag (9) als Gleitstoff Polytetraflourethylen, Molybdensulfit oder Polyethylen aufweist.

9. Schuhpresse nach einem der Ansprüche 4 bis 8,
dadurch **gekennzeichnet**,
daß in den den Preßschuh (4) tragenden Stirnflächen (10) der Kolben (5) hydraulische Drucktaschen (11) ausgebildet sind.

10. Schuhpresse nach Anspruch 9,
dadurch **gekennzeichnet**,
daß der Fluiddruck in den hydraulischen Drucktaschen (11) auf einen höheren Wert einstellbar ist als der Druck im Zylinderraum (13), mit dem die Kolben (5) an den Preßschuh (4) angepreßt werden.

11. Schuhpresse nach Anspruch 9,
dadurch **gekennzeichnet**,
daß die hydraulischen Drucktaschen (11) über Bohrungen (12) in den Kolben (5) mit Druckräumen (13) der Stützelemente (1) verbunden sind.

12. Schuhpresse nach einem der Ansprüche 9 bis 11,
dadurch **gekennzeichnet**,
daß die Drucktaschen (11) ringförmig ausgebildet sind und innerhalb der hydraulischen Drucktaschen (11) drucklose Taschen (14) ausgebildet sind.

13. Schuhpresse nach einem der Ansprüche 1 bis 12,
dadurch **gekennzeichnet**,
daß der Preßschuh (4) ein auf den Stützelementen (1) frei aufliegendes Schuhunterteil und ein die Anpreßfläche (15) aufweisendes Schuhoberteil aufweist und zwischen dem Schuhunterteil und dem Schuhoberteil ein wärmeisolierendes Element vorgesehen ist, das einem Wärmeübergang vom Schuhoberteil zum Schuhunterteil entgegenwirkt.

14. Schuhpresse nach einem der Ansprüche 1 bis 13,
dadurch **gekennzeichnet**,
daß in dem Preßschuh (4) mit einem Kühlmittel durchströmte Kühlmittelkanäle (17) vorgesehen sind, um den Preßschuh (4) während des Betriebs zu kühlen.

15. Schuhpresse nach Anspruch 14,
dadurch **gekennzeichnet**,
daß sich die Kühlmittelkanäle (17) in Bahnlaufrichtung (A) vom Bereich des Preßspalteinlasses bis in den Bereich bzw. bis kurz vor den Bereich der Preßebene (E) erstrecken und mit sich erweiternden Auslaufbohrungen (18) in die Anpreßfläche (15) des Preßschuhs (4) münden.

16. Schuhpresse nach Anspruch 15,
dadurch **gekennzeichnet**,
daß die Kühlmittelkanäle (17) einlaßseitig mit einer gemeinsamen Versorgungsleitung (19) verbunden sind, die sich im Bereich des Preßspalteinlasses quer zur Bahnlaufrichtung (A) im Preßschuh (4) erstreckt.

17. Schuhpresse nach Anspruch 15 oder 16,
dadurch **gekennzeichnet**,
daß die Kühlmittelkanäle (17) als Drosselbohrungen ausgebildet sind.

18. Schuhpresse nach einem der Ansprüche 15 bis 17,
dadurch **gekennzeichnet**,
daß die Auslaufbohrungen (18) im Austrittsbereich an der Anpreßfläche (15) eine Querschnittsfläche von 1 cm² bis 3 cm² besitzen.

19. Schuhpresse nach Anspruch 18,
dadurch **gekennzeichnet**,
daß die Achsen der Auslaufbohrungen (18) etwa 1° bis 3° in Bahnlaufrichtung (A) gegenüber der Preßebene gekippt sind.

20. Schuhpresse nach einem der Ansprüche 15 bis 19,
dadurch **gekennzeichnet**,
daß die Kühlmittelkanäle (17) parallel zueinander angeordnet sind und quer zur Bahnlaufrichtung (A) einen Abstand von 15 bis 50 mm haben.

21. Schuhpresse nach einem der Ansprüche 1 bis 20,
dadurch **gekennzeichnet**,
daß der Preßschuh (4) aus einem Werkstoff mit geringer Wärmedehnungszahl besteht.

## Claims

1. Shoe press for treating a material web, having a press shoe (4) which can be pressed against an opposing element (3), in particular an opposing roll, by means of a number of supporting elements (1), which are supported on a carrier (2) and formed as piston/ cylinder arrangements, with the interposition of a liquid-impermeable press cover (16) and a felt belt (7), and, in order to form a press nip with a predefined longitudinal extent with the opposing element (3), has a concavely shaped pressure face (15), the press shoe (4) being displaceable on the piston (5) of the supporting elements (1) and being carried so as to permit a tilting movement of the press shoe (4) both in the web running direction (A) and transversely with respect to the web running direction (A), and being supported, in the web running direction (A), on a stop (6) to absorb horizontal forces acting on the press shoe (4), characterized in that the tilt axis (K) of the press shoe (4) and a stop face (8) of the stop (6) essentially lie in a common plane (E) or cylindrical face which is at right angles to the press plane (P) and has a radius which is greater than 250 m.

2. Shoe press according to Claim 1, characterized in that the centre of the stop face (8) is offset in the direction of the opposing element (3) with respect to the plane (E) or cylindrical face going through the tilt axis of the press shoe (4), the offset being less than or equal to one third of the maximum design stroke of the press shoe (4).

3. Shoe press according to Claim 1 or 2, characterized in that the centre of the stop face (8) is offset in the direction of the opposing element (3) with respect to the cylindrical face going through the tilt axis of the press shoe (4), and the offset is at most 15 mm.

4. Shoe press according to one of Claims 1 to 3, characterized in that means for reducing the friction occurring between the press shoe (4) and the piston (5) are provided on the press shoe (4) and/or the piston (5).

5. Shoe press according to Claim 4, characterized in that on their end faces (10) carrying the press shoe (4), the pistons (5) are provided with a slippery covering (9).

6. Shoe press according to Claim 5, characterized in that the slippery covering (9) comprises a stable matrix which absorbs compressive forces and in which there is embedded a slippery material that reduces sliding friction.

7. Shoe press according to Claim 5, characterized in that the slippery covering (9) has a matrix made of a slippery material which is reinforced in particular by filaments, felts or fabrics.

8. Shoe press according to Claim 6 or 7, characterized in that the slippery covering (9) has polytetrafluoroethylene, molybdenum sulphide or polyethylene as the slippery material.

9. Shoe press according to one of Claims 4 to 8, characterized in that hydraulic pressure pockets (11) are formed in those end faces (10) of the pistons (5) which carry the press shoe (4).

10. Shoe press according to Claim 9, characterized in that the fluid pressure in the hydraulic pressure pockets (11) can be adjusted to a higher value than the pressure in the cylinder chamber (13) with which the pistons (5) are pressed against the press shoe (4).

11. Shoe press according to Claim 9, characterized in that the hydraulic pressure pockets (11) are connected to pressure chambers (13) in the supporting elements (1) via drilled holes (12) in the pistons (5).

12. Shoe press according to one of Claims 9 to 11, characterized in that the pressure pockets (11) are of annular design, and non-pressurized pockets (14) are formed within the hydraulic pressure pockets (11).

13. Shoe press according to one of Claims 1 to 12, characterized in that the press shoe (4) has a lower shoe part resting freely on the supporting elements (1) and an upper shoe part having the pressure face (15) and, between the lower shoe part and the upper shoe part, a heat-insulating element is provided which counteracts the transfer of heat from the upper shoe part to the lower shoe part.

14. Shoe press according to one of Claims 1 to 13, characterized in that coolant ducts (17) through which a coolant flows are provided in the press shoe (4), in order to cool the press shoe (4) during operation.

15. Shoe press according to Claim 14, characterized in that in the web running direction (A), the coolant ducts (17) extend from the area of the press-nip inlet as far as the area or shortly upstream of the area of the press plane (E) and open with widening outlet bores (18) into the pressure face (15) of the press shoe (4).

16. Shoe press according to Claim 15, characterized in that on the inlet side, the coolant ducts (17) are connected to a common supply line (19) which, in the area of the press-nip inlet, extends in the press shoe (4), transversely with respect to the web running direction (A).

17. Shoe press according to Claim 15 or 16, characterized in that the coolant ducts (17) are formed as drilled restrictor holes.

18. Shoe press according to one of Claims 15 to 17, characterized in that the outlet bores (18) in the outlet area on the pressure face (15) have a cross-sectional area of 1 cm² to 3 cm².

19. Shoe press according to Claim 18, characterized in that the axes of the outlet bores (18) are tilted with respect to the press plane by about 1° to 3° in the web running direction (A).

20. Shoe press according to one of Claims 15 to 19, characterized in that the coolant ducts (17) are arranged parallel to one another and, transversely with respect to the web running direction (A), have a spacing of 15 to 50 mm.

21. Shoe press according to one of Claims 1 to 20, characterized in that the press shoe (4) is composed of a material with a low coefficient of thermal expansion.

## Revendications

1. Presse à sabot pour le traitement d'une bande de matériau, comprenant un sabot de presse (4), qui peut être pressé contre un élément opposé (3), en particulier un rouleau conjugué, par plusieurs éléments d'appui (1) supportés au niveau d'un support (2) et configurés en tant que dispositifs cylindre-piston, en intercalant une enveloppe de serrage imperméable aux liquides (16) et une bande de feutre (7), et qui, pour la formation d'une ligne de contact de dimension longitudinale prédéterminée avec l'élément opposé (3), présente une face de pression (15) de forme concave, le sabot de presse (4) pouvant être déplacé sur les pistons (5) des éléments d'appui (1) et étant porté, en admettant un mouvement de basculement du sabot de presse (4) à la fois dans la direction d'avance de la bande (A) et transversalement à la direction d'avance de la bande (A) et s'appuyant dans la direction d'avance de la bande (A) contre une butée (6) pour recevoir les forces horizontales s'exerçant sur le sabot de presse (4), caractérisée en ce que l'axe de basculement (K) du sabot de presse (4) et une surface de butée (8) de la butée (6) se trouvent essentiellement dans un plan commun (E) perpendiculaire au plan de la presse (P), ou dans une surface cylindrique de rayon supérieur à 250 m.

2. Presse à sabot selon la revendication 1, caractérisée en ce que le centre de la face de butée (8) est décalé par rapport au plan (E) passant par l'axe de basculement du sabot de presse (4) ou la surface cylindrique dans la direction de l'élément opposé (2), le décalage étant inférieur ou égal à un tiers de la poussée maximale de construction du sabot de presse (4).

3. Presse à sabot selon la revendication 1 ou 2, caractérisée en ce que le centre de la surface de butée (8) est décalé par rapport à la surface cylindrique passant par l'axe de basculement du sabot de presse (4) dans la direction de l'élément opposé (3) et le décalage mesure au maximum 15 mm.

4. Presse à sabot selon l'une quelconque des revendications 1 à 3, caractérisée en ce que des moyens sont prévus sur le sabot de presse (4) et/ou les pistons (5) pour diminuer le frottement se produisant entre le sabot de presse (4) et les pistons (5).

5. Presse à sabot selon la revendication 4, caractérisée en ce que les pistons (5) sont pourvus d'un patin de glissement (9) sur leurs faces frontales (10) portant le sabot de presse (4).

6. Presse à sabot selon la revendication 5, caractérisée en ce que le patin de glissement (9) se compose d'une matrice stable, absorbant les forces de pression, dans laquelle est incorporée une substance de glissement réduisant le frottement de glissement.

7. Presse à sabot selon la revendication 5, caractérisée en ce que le patin de glissement (9) présente une matrice constituée d'une substance de glissement qui est renforcée en particulier par des fils, du feutre ou du tissu.

8. Presse à sabot selon la revendication 6 ou 7, caractérisée en ce que le patin de glissement (9) présente, en tant que substance de glissement, du polytétrafluoréthylène, du sulfite de molybdène ou du polyéthylène.

9. Presse à sabot selon l'une quelconque des revendications 4 à 8, caractérisée en ce que des poches de pression hydraulique (11) sont formées dans les faces frontales (10) des pistons (5) portant le sabot de presse (4).

10. Presse à sabot selon la revendication 9, caractérisée en ce que la pression de liquide dans les poches de pression hydraulique (11) est ajustable à une valeur plus élevée que la pression dans la chambre du cylindre (13), avec laquelle les pistons (5) sont pressés contre le sabot de presse (4).

11. Presse à sabot selon la revendication 9, caractérisée en ce que les poches de pression hydraulique (11) sont connectées à des chambres de pression (13) des éléments d'appui (1) par l'intermédiaire d'alésages (12) dans les pistons (5).

12. Presse à sabot selon l'une quelconque des revendications 9 à 11, caractérisée en ce que les poches de pression (11) sont configurées avec une forme annulaire et en ce que des poches (14) non pressurisées sont formées à l'intérieur des poches de pression hydraulique (11).

13. Presse à sabot selon l'une quelconque des revendications 1 à 12, caractérisée en ce que le sabot de presse (4) présente une partie inférieure de sabot reposant librement sur les éléments d'appui (1) et une partie supérieure de sabot présentant la face de pression (15) et en ce qu'un élément calorifuge est prévu entre la partie inférieure du sabot et la partie supérieure du sabot, lequel s'oppose au transfert de chaleur de la partie supérieure du sabot à la partie inférieure du sabot.

14. Presse à sabot selon l'une quelconque des revendications 1 à 13, caractérisée en ce que des canaux de réfrigérant (17) parcourus par un réfrigérant sont prévus dans le sabot de presse (4), afin de refroidir le sabot de presse (4) pendant le fonctionnement.

15. Presse à sabot selon la revendication 14, caractérisée en ce que les canaux de réfrigérant (17) s'étendent dans la direction d'avance de la bande (A) depuis la région de l'entrée de la ligne de contact jusque dans-la région, ou juste avant la région du plan de la presse (E) et débouchent dans la face de pression (15) du sabot de presse (4) avec des alésages de sortie évasés.

16. Presse à sabot selon la revendication 15, caractérisée en ce que les canaux de réfrigérant (17) sont connectés du côté de l'entrée à une conduite d'alimentation commune (19) qui s'étend dans la région de l'entrée de la ligne de contact transversalement à la direction d'avance de la bande (A) dans le sabot de presse (4).

17. Presse à sabot selon la revendication 15 ou 16, caractérisée en ce que les canaux de réfrigérant (17) sont configurés en tant qu'alésages à étranglement.

18. Presse à sabot selon l'une quelconque des revendications 15 à 17, caractérisée en ce que les alésages de sortie (18) possèdent, dans la région de sortie au niveau de la face de pression (15) une surface en section transversale de 1 cm² à 3 cm².

19. Presse à sabot selon la revendication 18, caractérisée en ce que les axes des alésages de sortie (18) sont inclinés d'environ 1° à 3° dans la direction d'avance de la bande (A) par rapport au plan de la presse.

20. Presse à sabot selon l'une quelconque des revendications 15 à 19, caractérisée en ce que les canaux de réfrigérant (17) sont disposés parallèlement les uns aux autres et sont espacés de 15 à 50 mm transversalement à la direction d'avance de la bande (A).

21. Presse à sabot selon l'une quelconque des revendications 1 à 20, caractérisée en ce que le sabot de presse (4) se compose d'un matériau de faible indice de dilatation thermique.
